(19) Europäisches Patentamt / European Patent Office / Office européen des brevets

(11) **EP 3 458 900 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **17723389.7**

(22) Anmeldetag: **15.05.2017**

(51) Internationale Patentklassifikation (IPC):
**G02B 27/01** (2006.01)

(52) Gemeinsame Patentklassifikation (CPC):
**G02B 27/0172;** G02B 2027/0123; G02B 2027/015; G02B 2027/0178

(86) Internationale Anmeldenummer:
**PCT/EP2017/061575**

(87) Internationale Veröffentlichungsnummer:
**WO 2017/198596 (23.11.2017 Gazette 2017/47)**

(54) **BRILLENGLAS FÜR EINE ABBILDUNGSOPTIK UND DATENBRILLE**

SPECTACLE LENS FOR AN IMAGING OPTICAL UNIT AND DATA GOGGLES

VERRE DE LUNETTES POUR SYSTÈME OPTIQUE DE REPRODUCTION ET LUNETTES DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2016 DE 102016109288**

(43) Veröffentlichungstag der Anmeldung:
**27.03.2019 Patentblatt 2019/13**

(73) Patentinhaber: **Tooz Technologies GmbH 73430 Aalen (DE)**

(72) Erfinder:
- **DOBSCHAL, Hans-Jürgen 99510 Kleinromstedt (DE)**
- **HILLENBRAND, Matthias 07745 Jena (DE)**
- **RUDOLPH,Günter 07743 Jena (DE)**

(74) Vertreter: **PATERIS Patentanwälte PartmbB Danckelmannstraße 9 14059 Berlin (DE)**

(56) Entgegenhaltungen:
EP-A1- 0 790 516        EP-A1- 0 790 516
DE-A1- 102013 214 700   DE-A1- 102013 214 700
DE-A1- 102014 207 499   US-A1- 2015 253 487
US-A1- 2015 253 487     US-A1- 2016 131 907
US-A1- 2016 131 907

- **OKA KEITA ET AL: "Asphere design for dummies", PROCEEDINGS OF SPIE, vol. 8487, 19 October 2012 (2012-10-19), 1000 20th St. Bellingham WA 98225-6705 USA, pages 84870B, XP055859120, ISSN: 0277-786X, ISBN: 978-1-5106-4548-6, DOI: 10.1117/12.930989**

**Beschreibung**

Die vorliegende Erfindung betrifft ein Brillenglas für eine Abbildungsoptik zum Erzeugen eines virtuellen Bildes von einem auf einem Bildgeber dargestellten Ausgangsbild. Daneben betrifft die Erfindung eine Abbildungsoptik und eine Datenbrille.

Eine Datenbrille ist eine spezielle Form eines Head Mounted Displays. Eine gängige Form von Head Mounted Displays verwendet Bildschirme, die vor den Augen getragen werden und dem Benutzer elektronische Bilder wie etwa computergenerierte Bilder oder von Kameras aufgenommene Bilder, präsentieren. Derartige Head Mounted Displays sind häufig voluminös und erlauben keine unmittelbare Wahrnehmung der Umgebung. In jüngerer Zeit sind Head Mounted Displays entwickelt worden, die in der Lage sind, elektronische Bilder mit dem unmittelbar wahrgenommenen Bild der Umgebung zu kombinieren und so dem Benutzer ein elektronisches Bild darzubieten, ohne die unmittelbare Wahrnehmung der Umgebung zu verhindern. Derartige Head Mounted Displays, die nachfolgend Datenbrillen genannt werden, ermöglichen die Nutzung dieser Technologie im alltäglichen Leben.

Die DE 10 2013 214 700 A1 offenbart ein Brillenglas für eine bilderzeugende Anzeigevorrichtung mit einer Vorderseite und einer Rückseite, einem Einkoppelabschnitt und einem Auskoppelabschnitt, wobei das erzeugte Bild über den Einkoppelabschnitt eingekoppelt und im Brillenglas durch innere Totalreflexion zum Auskoppelabschnitt geführt und über den Auskoppelabschnitt ausgekoppelt wird.

Die EP 0 790 516 A1 beschreibt ein Bildanzeigegerät mit einer vor dem Auge zu positionierenden Okularoptik.

Die US 2015/0253487 A1 beschreibt ein reflektives Display, das einen Lichtleiter umfasst.

Die US 2016/0131907 A1 beschreibt eine Okularoptik für ein am Kopf zu tragendes Bildanzeigegerät.

Die DE 10 2014 207499 A1 beschreibt eine weitere Okularoptik.

Beim Kombinieren der elektronischen Bilder mit dem unmittelbar wahrgenommenen Bild der Umgebung unterscheidet man im Wesentlichen die folgenden Prinzipien, auf denen das Kombinieren beruhen kann:

1. Verwendung einer normalen Brille mit vorgesetztem Strahlkombinierer (z.B. Strahlteilerwürfel).
2. Direkte Einkopplung des Lichtes von der Seite über einen Reflex an der Innenseite des Brillenglases, wobei unterstützend Beugungsgitter, Fresnelelemente o.ä. eingesetzt werden.
3. Führung des Lichtes des elektronischen Bildes mittels Totalreflektion im Brillenglas und Zusammenführen des Strahlengangs des elektronischen Bildes mit dem unmittelbaren Bild der Umgebung mit Hilfe einer im Brillenglas angeordneten Auskopplungsstruktur zum Auskoppeln des Strahlengangs des elektronischen Bildes aus dem Brillenglas in Richtung auf das Auge. Ein entsprechendes Brillenglas ist bspw.in DE 10 2014 118 490 A1 beschrieben.

Das erste Prinzip funktioniert zwar optisch sehr gut, hat aber nur eine sehr geringe soziale Akzeptanz, da der vorgesetzte Strahlkombinierer nach außen sehr auffällig und groß ist. Außerdem wird die Brille dadurch vorderlastig Das zweite Prinzip lässt sich anatomisch nur bei stark vergrößertem Abstand zwischen Brille und Kopf realisieren, was ebenfalls nicht akzeptabel ist.

Die erfolgsversprechenderen Ansätze gehen daher vom dritten Prinzip aus, also von der Lichtführung im Brillenglas. Die Auskopplungsstruktur kann dabei als Beugungsgitter, als teiltransparenter schräg gestellter Spiegel oder in Form von teiltransparenten Fresnelelementen ausgebildet sein. Im Falle eines Beugungsgitters wird der Strahlengang des elektronischen Bildes bspw. über das Beugungsmaximum der 1. Ordnung aus dem Brillenglas ausgekoppelt, während über das Beugungsmaximum der 0. Ordnung das Beobachtungslicht die Auskopplungsstruktur möglichst unbeeinträchtigt passieren kann.

Bei der Auskopplung ergeben sich aber die nachfolgend beschriebenen Grundsatzprobleme, die insbesondere vom verwendeten Prinzip abhängen.

Beim Auskoppeln des Strahlengangs des elektronischen Bildes mittels eines Beugungsgitters müssen sowohl für die Ein- wie Auskopplung des Strahlengangs Gitter der gleichen Frequenz verwendet werden um eine unzumutbare Spreizung des Spektrums zu verhindern. Die Étendue des Abbildungsstrahlenbündels, die im Rahmen der weiteren Erläuterungen vereinfachend als das Produkt aus dem Sichtfeldwinkel des horizontalen Sichtfeldes und der horizontalen Ausdehnung der Eye-Box (derjenige Bereich der Lichtröhre im Abbildungsstrahlengang, in dem sich die Augenpupille bewegen kann, ohne dass eine Vignettierung des Bildes erfolgt) angesehen werden kann, ist hierbei stark eingeschränkt. Dies kommt daher, dass zum einen der Beugungswinkel für das blaue Licht so groß sein muss, dass interne Totalreflexion im Glas erreicht wird, er aber zum anderen für das rote Licht nicht über 90 Grad liegen darf. Dazu kommen noch die Forderung an den Sichtfeldwinkel des horizontalen Sichtfeldes wodurch diese Randbedingung weiter verschärft wird. Problematisch ist dabei auch die Beugungseffizienz, da durch die zweimalige Beugung viel Licht verloren geht und außerdem eine homogene Effizienz über dem Spektrum kaum erreichbar ist.

Beim Auskoppeln des Strahlengangs des elektronischen Bildes mittels eines schräg gestellten Spiegels stellt die maximal tolerierbare Brillenglasdicke eine harte Grenze dar. Um die Totalreflexion zu erreichen, muss der Auskoppelspiegel einen Mindestkippwinkel aufweisen. Da er in ein aus ästhetischen Gründen relativ dünnes Brillenglas passen muss, kann er somit nur relativ schmal sein, was bedeutet, dass die transportierte Étendue sehr gering ausfällt.

Beim Auskoppeln des Strahlengangs des elektronischen Bildes mittels Fresnelelementen treten weniger Nachteile auf, da hier zum einen keine spektrale Abhängigkeit vorliegt und zum anderen das Fresnelelement nicht wie der Auskoppelspiegel gegenüber der Innenfläche oder der Außenfläche schräg gestellt werden muss. Dennoch ist auch im Falle des Auskoppelns des Strahlengangs des Strahlengangs mit Hilfe von Fresnelelementen ein Vergrößern der Étendue wünschenswert.

Es ist daher eine Aufgabe der vorliegenden Erfindung, ein Brillenglas für eine Abbildungsoptik zur Verfügung zu stellen, welches einen größeren Wert für die Étendue ermöglicht. Weiterhin ist es eine Aufgabe der Erfindung, eine Abbildungsoptik sowie eine Datenbrille zur Verfügung zu stellen, die einen größeren Wert für die Étendue ermöglichen.

Die erste Aufgabe wird durch ein Brillenglas nach Anspruch 1 gelöst, die weitere Aufgabe durch eine Abbildungsvorrichtung nach Anspruch 9 bzw. eine Datenbrille nach Anspruch 12. Die abhängigen Ansprüche enthalten vorteilhafte Ausgestaltungen der Erfindung.

Ein erfindungsgemäßes Brillenglas für eine Abbildungsoptik zum Erzeugen eines virtuellen Bildes von einem auf einem Bildgeber dargestellten Ausgangsbild umfasst eine dem Auge zuzuwendende Innenfläche und eine vom Auge abzuwendende Außenfläche, einen Einkopplungsabschnitt zum Einkoppeln eines vom Ausgangsbild ausgehenden Abbildungsstrahlengangs zwischen die Innenfläche und die Außenfläche des Brillenglases und eine in dem Brillenglas vorhandene Auskopplungsstruktur zum Auskoppeln des Abbildungsstrahlengangs aus dem Brillenglas in Richtung auf das Auge. Der Abbildungsstrahlengang wird dabei durch Reflektionen zwischen der Innenfläche und der Außenfläche zur Auskopplungsstruktur geleitet. Zwischen dem Einkopplungsabschnitt und der Auskopplungsstruktur ist im erfindungsgemäßen Brillenglas im Bereich der Innenfläche wenigstens eine vom Inneren des Brillenglases aus gesehen konkav gekrümmte - und somit eine sammelnde Wirkung auf den Abbildungsstrahlengang ausübende - Reflektionsfläche, vorhanden, deren Krümmung sich von einer Grundkrümmung der Innenfläche des Brillenglases unterscheidet. Alternativ oder zusätzlich ist zwischen dem Einkopplungsabschnitt und der Auskopplungsstruktur im Bereich der Außenfläche wenigstens eine vom Inneren des Brillenglases aus gesehen konkav gekrümmte Reflektionsfläche vorhanden, deren Krümmung sich von einer Grundkrümmung der Außenfläche des Brillenglases derart unterscheidet, dass sie eine gegenüber der Grundkrümmung der Außenfläche erhöhte Konkavität aufweist. Die Auskopplungsstruktur ist dann vorzugsweise ausschließlich strahlablenkend, also ohne Sammel- oder Zerstreuungswirkung, ausgebildet.

Mit der konkav gekrümmten Reflektionsfläche wird eine sammelnde Wirkung erzielt, mit deren Hilfe sich die Étendue vergrößern lässt. Wenn der Strahlengang durch das Brillenglas rückwärts - also vom Auge zum Einkopplungsabschnitt und somit entgegen des tatsächlichen Verlaufs - betrachtet wird, kann in Richtung auf den Einkopplungsabschnitt mit Hilfe der sammelnden Wirkung der Reflektionsfläche eine Bündelung des von der Eyebox aus im Wesentlichen kollimiert auf die Auskopplungsstruktur auftreffenden Strahlenbündel in Richtung auf den Einkopplungsabschnitt erfolgen. Dadurch wird zum einen wegen des sich verjüngenden Bündelquerschnitts einerseits für die in Richtung auf den Einkopplungsabschnitt folgenden Reflektionsflächen eine geringere laterale Ausdehnung benötigt und zum anderen kann erreicht werden, dass das Strahlenbündel im Bereich des Einkopplungsabschnitts einen im Vergleich zu einem Brillenglas ohne konkav gekrümmte Reflektionsfläche deutlich verringerten Bündelquerschnitt besitzen kann, was die Einkopplung in das Brillenglas erleichtert. Dadurch kann der Platzbedarf zwischen Bildgeber und Brillenglas verringert werden, und im günstigsten Fall kann auf die bisher verwendete Einkopplungseinrichtung zum Einkoppeln eines vom Ausgangsbild ausgehenden Abbildungsstrahlengangs zwischen die Innenfläche und die Außenfläche des Brillenglases verzichtet werden. In diesem Fall kann der Bildgeber unmittelbar am Einkopplungsabschnitt oder in unmittelbarer Nähe des Einkopplungsabschnitts angeordnet werden. In beiden Fällen erfolgt die Einkopplung ohne Zwischenschaltung einer Einkopplungseinrichtung.

Im erfindungsgemäßen Brillenglas kann zumindest diejenige Reflektionsfläche, an der die letzte Reflektion des Abbildungsstrahlengangs vor der Auskopplungsstruktur erfolgt, als konkav gekrümmte Reflektionsfläche ausgebildet sein. Dadurch setzt die Bündelquerschnittsreduzierung des Abbildungsstrahlengangs (rückwärts gesehen, also vom Auge zum Einkopplungsabschnitt und somit entgegen des tatsächlichen Verlaufs) früher ein, so dass die laterale Ausdehnung der nachfolgenden Reflektionsflächen bei gegebenem Feldwinkel möglichst gering gehalten werden kann oder bei gegebener lateraler Ausdehnung der nachfolgenden Reflektionsflächen ein möglichst großer Feldwinkel erreicht werden kann. Außerdem kann die Reduziereng des Bündelquerschnitts im Bereich des Einkopplungsabschnitts mit einer langen Brennweite erreicht werden, so dass die Krümmung der Reflektionsfläche gegenüber Grundkrümmung der Innenfläche bzw. der Außenfläche des Brillenglases möglichst gering gehalten werden kann.

Es ist auch vorteilhaft, wenn zumindest diejenige Reflektionsfläche, an der die vorletzte Reflektion des Abbildungsstrahlengangs vor der Auskopplungsstruktur erfolgt, als konkav gekrümmte Reflektionsfläche ausgebildet ist, da sich diese dann an derselben Fläche des Brillenglases wie die Auskopplungsstruktur befindet, was fertigungstechnische Vorteile mit sich bringt, da beide dann in gemeinsamen Arbeitsschritten hergestellt werden können. Wenn sich die konkav gekrümmte Reflektionsfläche an der vom Inneren des Brillenglases aus gesehen üblicherweise ebenfalls konkav gekrümmten Außenfläche des Brillenglases befindet, braucht zudem die Abweichung von der Grundkrümmung des Brillenglases nicht so stark auszufallen wie bei einer Anordnung der konkav gekrümmten Reflektionsfläche an der Innenfläche des Brillenglases, die vom Inneren des Brillenglases gesehen in der Regel eine konvexe Krümmung besitzt.

Selbstverständlich besteht auch die Möglichkeit zwei oder mehr der Reflektionsflächen als konkav gekrümmte Reflektionsflächen, auszubilden, so dass die sammelnde Wirkung auf mehrere Reflektionsflächen aufgeteilt werden kann, was wiederum eine geringere Abweichung der jeweiligen Reflektionsflächen von den Grundkrümmungen der Brillenglasflächen, in denen sie ausgebildet sind, ermöglicht.

Im erfindungsgemäßen Brillenglas beruhen die Reflektionen des Abbildungsstrahlengangs wenigstens zum Teil auf Totalreflektion an der Innenfläche und/oder der Außenfläche. Die wenigstens eine konkav gekrümmte Reflektionsfläche ist ein vom Inneren des Brillenglases aus gesehen konkav gekrümmter Flächenabschnitt, dessen Krümmung sich von der Grundkrümmung der Innenfläche bzw. der Außenfläche des Brillenglases unterscheidet.

Grundsätzlich ist es möglich, dass die Totalreflektion an der Grenzfläche zwischen dem Brillenglas und der umgebenden Luft erfolgt. Um die Innenfläche und die Außenfläche zu schützen oder um einen bestimmten optische Wirkung oder einen gewünschten ästhetische Effekt zu erzielen, können die Innenfläche und/oder die Außenfläche jedoch auch mit einer Beschichtung versehen sein. Erfindungsgemäß weist das Brillenglas daher einen transparenten Grundkörper mit einem ersten Brechungsindex auf, in dem sich der Einkopplungsabschnitt befindet und in den der Abbildungsstrahlengang einkoppelt wird. Dieser Grundkörper weist eine der Innenfläche des Brillenglases entsprechende Grundkörperinnenfläche sowie eine der Außenfläche des Brillenglases entsprechende Grundkörperaußenfläche auf, und der wenigstens eine konkav gekrümmte Flächenabschnitt ist in der Grundkörperinnenfläche und/oder in der Grundkörperaußenfläche ausgebildet. Im Bereich des wenigstens einen konkav gekrümmten Flächenabschnitts befindet sich auf der Grundkörperinnenfläche und/oder der Grundkörperaußenfläche eine erste Schicht mit einem zweiten Brechungsindex. Der zweite Brechungsindex ist im Verhältnis zum ersten Brechungsindex so gewählt, dass an der Grenzfläche zwischen dem Grundkörper und der ersten Schicht eine Totalreflektion von Lichtstrahlen des Abbildungsstrahlengangs erfolgt. Mit anderen Worten, der zweite Brechungsindex erfüllt die Bedingung $n2 < n1 \sin(\theta E)$, wobei $\theta E$ einen Einfallswinkel der vom Einkopplungsabschnitt ausgehenden und auf den jeweiligen Reflexionsabschnitt einfallenden Lichtstrahlen des Abbildungsstrahlengangs repräsentiert, $n1$ den ersten Brechungsindex repräsentiert und $n2$ den zweiten Brechungsindex repräsentiert, und wobei der Einfallswinkel $\theta$ derart gewählt ist, dass mindestens 50 % der Lichtstrahlen des Abbildungsstrahlengangs, insbesondere mindestens 75 % der Lichtstrahlen des Abbildungsstrahlengangs, einen Einfallswinkel $\theta > \theta E$ aufweisen. Dadurch ist gewährleistet, dass mindestens 50% und insbesondere mindestens 75% der auf die Reflektionsfläche Lichtstrahlen des Abbildungsstrahlengangs durch Totalreflektion reflektiert werden. Je höher der Anteil der durch Totalreflektion reflektierten Strahlen ist, desto heller erscheint das beobachtbare Bild bei einer gegebenen Bildhelligkeit des Ausgangsbildes.

Über der ersten Schicht befindet sich eine zweite Schicht mit einem dem Brechungsindex des Grundmaterials entsprechenden Brechungsindex. Unter einander entsprechenden Brechungsindizes sollen im Rahmen der vorliegenden Beschreibung solche Brechungsindizes verstanden werden, die sich nicht mehr als 5 ‰ vorzugsweise nicht mehr als 1 ‰ voneinander unterscheiden. Dadurch wird die optische Wirkung der Reflektionsfläche auf transmittierte Umgebungslichtstrahlen minimiert. Die zweite Schicht kann insbesondere eine Folie mit einem dem Brechungsindex des Grundmaterials entsprechenden Brechungsindex sein oder eine solche Folie umfassen. Die erste Schicht und/oder die zweite Schicht können als Klebstoffschicht ausgebildet sein, was fertigungstechnische Vorteile mit sich bringt. Insbesondere kann die zweite Schicht eine an die erste Schicht angrenzende Klebstoffschicht und eine an die Klebstoffschicht angrenzende Folie mit einem dem Brechungsindex des Grundmaterials entsprechenden Brechungsindex umfassen. Die Verwendung einer als Folie ausgebildeten oder eine Folie umfassenden zweiten Schicht ermöglicht eine Kapselung des Brillenglases zum Schutz der ersten Schicht und des Glases selbst. Daneben ermöglicht sie, das Brillenglas mit zusätzlichen oberflächennahen Funktionen zu versehen. Beispielsweise kann zur Realisierung einer Sonnenbrillenfunktion eine Absorptions- oder Polarisationsfolie Verwendung finden, um die Intensität von Sonnenlicht, das das Auge des Benutzers erreicht, zu reduzieren.

Um die Abbildungsqualität des Brillenglases zu erhöhen, besteht sie Möglichkeit, dass im erfindungsgemäßen Brillenglas der wenigstens einen konkav gekrümmten Reflektionsfläche eine Freiformfläche mit Abbildungsfehler zumindest teilweise korrigierenden Eigenschaften überlagert ist.

Eine erfindungsgemäße Abbildungsvorrichtung zum Erzeugen eines virtuellen Bildes umfasst einen Bildgeber zum Darstellen eines Ausgangsbildes und ein erfindungsgemäßes Brillenglas. Die mit der erfindungsgemäßen Abbildungsvorrichtung zu erzielenden Vorteile ergeben sich aus den Ausführungen zum erfindungsgemäßen Brillenglas, weshalb auf die Ausführungen zum erfindungsgemäßen Brillenglas verwiesen wird. Insbesondere bietet die erfindungsgemäße Abbildungsvorrichtung die Möglichkeit, dass der Bildgeber unmittelbar am Einkopplungsabschnitt oder unmittelbar in der Nähe des Einkopplungsabschnitts, also ohne Zwischenschaltung einer Einkopplungseinrichtung, angeordnet ist. Es besteht aber dennoch auch die Möglichkeit, dass zwischen dem Bildgeber und dem Einkopplungsabschnitt eine Einkopplungseinrichtung zum Einkoppeln eines vom Ausgangsbild ausgehenden Abbildungsstrahlengangs zwischen die Innenfläche und die Außenfläche des Brillenglases vorhanden ist. Eine Einkopplungseinrichtung kann bspw. als Prisma mit abbildender Wirkung ausgebildet sein.

Eine erfindungsgemäße Datenbrille umfasst wenigstens eine erfindungsgemäße Abbildungsvorrichtung. Wie bei der erfindungsgemäßen Abbildungsvorrichtung ergeben sich die mit der erfindungsgemäßen Datenbrille zu erzielenden Vorteile aus den Ausführungen zum erfindungsgemäßen Brillenglas, weshalb auf die Ausführungen zum erfindungsgemäßen Brillenglas verwiesen wird.

Weitere Merkmale, Eigenschaften und Vorteile der vorliegenden Erfindung ergeben sich aus der nachfolgenden Beschreibung von Ausführungsbeispielen unter Bezugnahme der beiliegenden Figuren.

Figur 1    verdeutlicht den Footprint-Overlap für ein konventionelles Brillenglas mit einem schräg gestellten Spiegel zum Auskoppeln des Abbildungsstrahlengangs.

Figur 2    verdeutlicht den Footprint-Overlap für ein konventionelles Brillenglas mit einem Beugungsgitter oder einem Fresnelelement zum Auskoppeln des Abbildungsstrahlengangs.

Figur 3    zeigt ein konventionelles Brillenglas mit einem schräg gestellten, sammelnden Spiegel zum Auskoppeln des Abbildungsstrahlengangs.

Figur 4    verdeutlicht für ein konventionelles Brillenglas mit einem Fresnelelement zum Auskoppeln des Abbildungsstrahlengangs den Strahlenbündeldurchmesser des Abbildungsstrahlengangs im Bereich des Einkopplungsabschnitts.

Figur 5    zeigt ein nicht erfindungsgemäßes Brillenglas mit einer konkav gekrümmten Reflektionsfläche zwischen dem Einkopplungsabschnitt und der Auskopplungsstruktur.

Figur 6    zeigt ein Ausführungsbeispiel für ein erfindungsgemäßes Brillenglas mit einer konkav gekrümmten Reflektionsfläche zwischen dem Einkopplungsabschnitt und der Auskopplungsstruktur.

Figur 7    zeigt ein weiteres Ausführungsbeispiel für ein erfindungsgemäßes Brillenglas mit einer konkav gekrümmten Reflektionsfläche zwischen dem Einkopplungsabschnitt und der Auskopplungsstruktur.

Figur 8    zeigt ein Beispiel für eine Datenbrille.

Figur 9    zeigt ein Brillenglas mit einem Prisma als Einkopplungseinrichtung

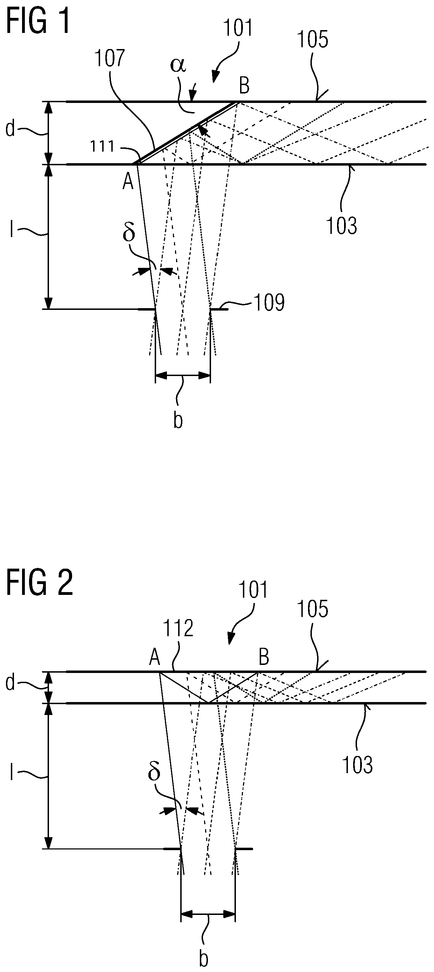

Um die Wirkung der erfindungsgemäßen Ausgestaltung des Brillenglases zu erläutern, wird zuerst unter Bezugnahme auf die Figuren 1 und 2 auf die Problematik des "Footprint-Overlaps" eingegangen, welches bei allen drei Auskoppelvarianten (Beugungsgitter, schräg gestellter Spiegel und Fresnelelemente) vorkommt, aber unterschiedlich gut gelöst wird.

Mit Bezug auf Figur 1 wird die Problematik des "Footprint-Overlaps" für ein konventionelles Brillenglas 101 mit einem schräg gestellten Auskopplungsspiegel zum Auskoppeln des Abbildungsstrahlengangs beschrieben. Dargestellt ist ein Ausschnitt aus dem Brillenglas 101, der neben der Innenfläche 103 und der Außenfläche 105 des Brillenglases 101 den um den Kippwinkel $\alpha$ zur Außenfläche 105 schräg gestellten Auskopplungsspiegel 107 zeigt. Außerdem zeigt Figur 1 den Sichtfeldwinkel $\delta$ des horizontalen Sichtfeldes und die Eye-Box 109. Die Eye-Box 109 ist derjenige dreidimensionale Bereich der Lichtröhre im Abbildungsstrahlengang, in dem sich die Augenpupille (in Figur 1 nicht dargestellt) bewegen kann, ohne dass eine Vignettierung des Bildes erfolgt. Da bei einer Datenbrille der Abstand des Auges in Bezug auf die Datenbrille im Wesentlichen konstant ist, kann die Eye-Box auf eine zweidimensionale Eye-Box, welche lediglich die Drehbewegungen des Auges berücksichtigt, reduziert werden. In diesem Fall entspricht die Eye-Box im Wesentlichen der Austrittspupille der Datenbrille am Ort der Eintrittspupille des Auges. Letztere ist in der Regel durch die Augenpupille gegeben.

Obwohl es sich bei einer Datenbrille um ein System handelt, mit dem ein Abbildungsstrahlengang vom Bildgeber zur Eye-Box 109 verläuft, ist es zum Verständnis des "Footprint-Overlaps" hilfreich, den Strahlengang in umgekehrter Richtung, also von der Eye-Box 109 zum Bildgeber, zu betrachten. Es wird daher bei den nachfolgenden Darlegungen eine von der Eye-Box 109, ausgehende Lichtröhre betrachtet, wobei die Grenzen der Lichtröhre durch die Sichtfeldwinkel $\delta$ der sich von jedem Punkt der Eye-Box in Richtung auf das Brillenglas ausbreitenden Strahlenbündel bestimmt ist.

Ein von der Eye-box 109 ausgehender Strahl, der vom Spiegel 107 an dem am weitesten links liegenden Punkt A reflektiert wird, trifft nach Reflexion am Spiegel 107 und innerer Totalreflektion am Punkt 111 der Innenfläche 103 am Punkt B auf die Außenfläche 105 des Brillenglases 101 auf. Dieser Punkt B darf sich nicht mehr auf dem Spiegel 107 befinden, da der Strahl sonst ein zweites Mal vom Spiegel 107 reflektiert werden würde und dadurch für die Abbildung verloren ginge. Um im vorliegenden Beispiel die Problematik des "Footprint-Overlaps" zu verringern, müsste der Auskopplungsspiegel 107 verlängert werden, um so den Abstand zwischen den Punkten A und zu B vergrößern, wobei jedoch der Winkel $\alpha$, um den der Spiegel 107 schräg gestellt ist, unverändert bleiben müsste. Dadurch würde sich jedoch die Brillenglasdicke vergrößern. Die Berechnungsvorschrift für die notwendige Brillenglasdicke d bei vorgegebener Breite b der Eye-Box, vorgegebenem Abstand I der Eye-Box vom Brillengas 101 und vorgegebenem Sichtfeldwinkel $\delta$ lautet:

$$d = (b + l \tan \delta) \tan \alpha \, .$$

Figur 2 illustriert die Problematik des "Footprint-Overlaps" für ein konventionelles Brillenglas 101 mit einem Beugungsgitter oder einem Fresnelelement als Auskopplungsstruktur 112 zum Auskoppeln des Abbildungsstrahlengangs. In diesem Fall lautet die Berechnungsvorschrift für die notwendige Brillenglasdicke d bei vorgegebener Breite b der Eye-Box, vorgegebenem Abstand I der Eye-Box vom Brillengas 101 und vorgegebenem Sichtfeldwinkel δ:

$$d = \frac{(b + l \tan \delta)}{2} \tan \alpha \, ,$$

wobei der Winkel α im Falle des Beugungsgitters den Winkel der durch die Beugung hervorgerufenen Ablenkung der Strahlen repräsentiert. Im Falle des Fresnelelements repräsentiert der Winkel α den Kippwinkel, um den die Fresnelfacetten des Fresnelelements gegenüber der Außenfläche 105 des Brillenglases 101 schräg gestellt sind. In den obigen Formeln sind einige Näherungen enthalten, welche aber den grundlegenden Zusammenhang nicht verfälschen.

Man erkennt bereits aus Figur 2 (die denselben Maßstab wie Figur 1 aufweist), dass hier eine deutlich geringere Brillenglasdicke d oder anders herum gesagt eine größere Étendue möglich ist. Als Faustformel gilt, dass bei jeweils gleicher Brillenglasdicke mit dem Beugungsgitter oder dem Fresnelelement eine etwa doppelt so große Étendue möglich ist wie mit dem schräg gestellten Spiegel aus Figur 1.

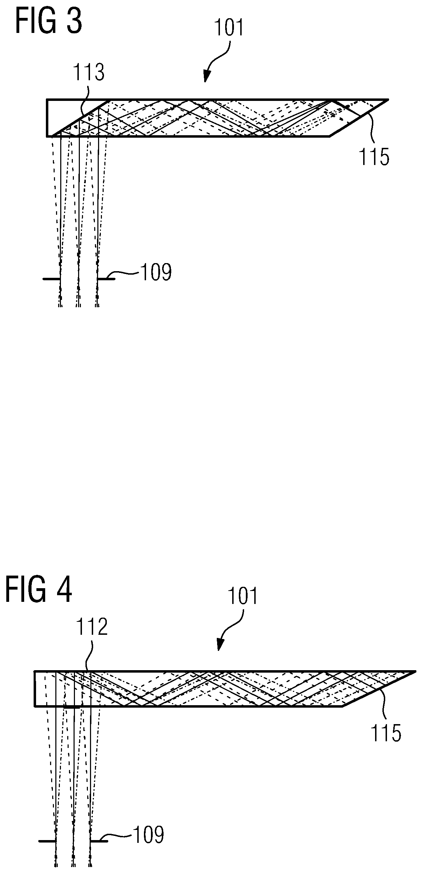

Eine weitere die Étendue beeinflussende Problematik neben der des "Footprint Overlaps" stellt das Anwachsen des Bündeldurchmessers im Abbildungsstrahlengang mit zunehmendem Abstand von der Auskopplungsstruktur in Richtung auf den Einkopplungsabschnitt im Brillenglas dar. Dem kann man im Falle des schräg gestellten Auskopplungsspiegels entgegenwirken, indem man den Auskoppelspiegel mit einer sammelnden Wirkung versieht (Konkavspiegel). Dies ist schematisch in Figur 3 dargestellt, die das Brillenglas 101, den schräg gestellten Konkavspiegel 113 und den Einkopplungsabschnitt 115 zeigt. In Figur 3 ist zu erkennen, dass durch die sammelnde Wirkung des Auskopplungsspiegels das Licht gut durch den Einkopplungsabschnitt 115 des Brillenglases 101 passt.

Bei der diffraktiven Auskopplung könnte man zwar analog mehr diffraktive Brechkraft in das Auskoppelgitter legen, was aber korrektionstechnisch kaum beherrschbar ist, da auch planare abbildende Gitter einen spektral abhängigen Schnittweitenverlauf besitzen und auch die anderen Bildfehler höherer Ordnung spektral variabel sind.

Die Fresnelvariante bereitet in dieser Hinsicht ebenfalls Probleme, da man dafür sorgen muss, dass Bündelbereiche, die vom gleichen Bildgeberpunkt ausgehen, von allen Fresnelfacetten annähernd ähnlich abgelenkt werden, Ansonsten würde die Bildperformance gestört werden. Die Pupille wird durch die Fresnellierung gewissermaßen segmentiert, und man muss dem durch ein nichtabbildendes Verhalten des Fresnelelements entgegenwirken. Es ist also im Wesentlichen nur eine Umlenkung analog zu einem DMD-Chip erlaubt. In Fig. 4 ist dargestellt, dass man wie durch das nichtkollimierende Verhalten des Fresnelelements 112 das Licht nur sehr schwierig die Brillenaustrittsöffnung ungehindert passieren kann. Insbesondere im Falle eines Beugungsgitters oder eines Fresnelelements als Auskopplungsstruktur 112 stellt das Anwachsen des Bündeldurchmessers im Abbildungsstrahlengang mit zunehmendem Abstand von der Auskopplungsstruktur einen die Étendue beschränkenden Faktor dar.

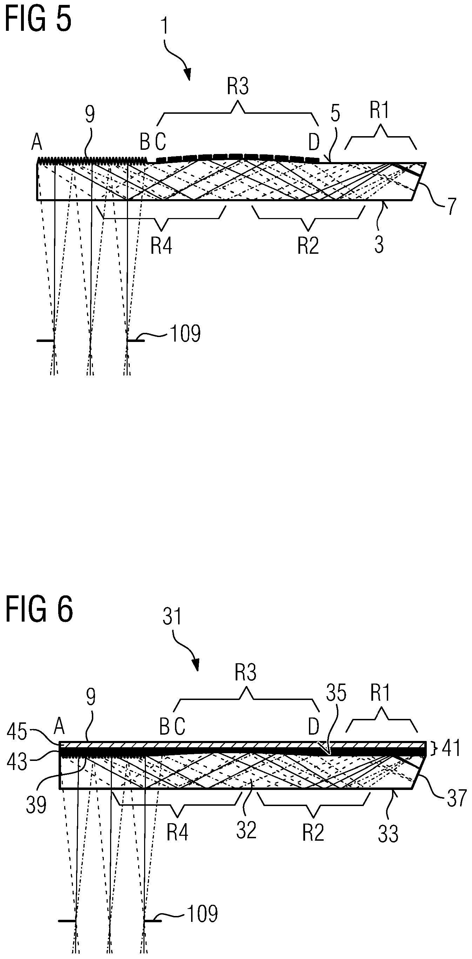

Figur 5 zeigt ein Vergleichsbeispiel für ein Brillenglas 1 zum Überwinden der angesprochenen Problematik. Das Brillenglas 1 weist eine dem Auge zuzuwendende Innenfläche 3 und eine vom Auge abzuwendende Außenfläche 5 auf. Am Rand des Brillenglases ist zudem ein Einkopplungsabschnitt 7 vorhanden, über den ein Abbildungsstrahlengang, der von einem auf einem Bildgeber (in Figur 5 nicht gezeigt) dargestellten Ausgangsbild ausgeht, zwischen die Innenfläche 3 und die Außenfläche 5 in das Brillenglas 1 eingekoppelt wird. Das Brillenglas 1 umfasst ein Fresnelelement 9, das im vorliegenden Beispiel als Auskopplungsstruktur zum Auskoppeln des Abbildungsstrahlengangs aus dem Brillenglas 1 in Richtung auf das Auge (nicht dargestellt) dient. Ein über den Einkopplungsabschntt 7 in das Brillenglas 1 eingekoppeltes Abbildungsstrahlenbündel des Abbildungsstrahlengangs wird über Reflektionen an Reflektionsflächen R1, R2, R3 und R4 zum Fresnelelement 9 geleitet, von dem das Strahlenbündel dann in Richtung auf das die Eye-Box aus dem Brillenglas 1 ausgekoppelt wird.

In dem in Figur 5 dargestellten Beispiel erfolgen das Leiten des Abbildungsstrahlenbündels zum Fresnelelement 9 über vier Totalreflexionen an den Reflektionsflächen R1, R2, R3 und R4. Die Totalreflexionen der Reflektionsflächen R1 und R3 erfolgen dabei an der Außenfläche 5 des Brillenglases 1, wohingegen die Totalreflexionen der Reflektionsflächen R2 und R4 an der Innenfläche 3 des Brillenglases 1 erfolgen. Dabei weisen die Reflexionsflächen R1, R2 und R4 eine Krümmung auf, die der Grundkrümmung des Brillenglases 1 entspricht. Die Grundkrümmung eines Brillenglases ist typischerweise sphärisch, wobei die Radien annähernd gleich sind, wenn keine Fehlsichtigkeit mit dem Brillenglas ausgeglichen werden soll, oder unterschiedlich sein können, wenn eine Fehlsichtigkeit ausgeglichen werden soll. Die Reflektionsfläche R3 weist dagegen vom Brillenglasinneren aus gesehen eine konkave Krümmung auf, die von der Grundkrümmung der Außenfläche 5 des Brillenglases 1 abweicht. In der Regel ist auch die Grundkrümmung der Außenfläche 5 des Brillenglases 1 vom Brillenglasinneren her gesehen konkav, jedoch weicht die Krümmung der Reflektionsfläche R3 dergestalt von der Grundkrümmung ab, dass sie eine gegenüber der Grundkrümmung erhöhte Konkavität aufweist. Durch diese zusätzliche konkave Krümmung der Reflektionsfläche R3 wird ein von der Eye-Box 109 ausgehendes Strahlenbündel fokussiert, wodurch ein Fokus in oder in der Nähe des Einkopplungsabschnitts 7 erreicht werden kann. Dadurch kann das Strahlenbündel auch durch einen relativ schmalen Einkopplungsabschnitt 7 in das Brillenglas eingekoppelt werden, wodurch sich eine große Étendue erreichen lässt. Man beachte, dass bei der soeben angestellten Betrachtung der Abbildungsstrahlengang wieder rückwärts, also von der Eye-Box 109 in Richtung auf den Bildgeber statt vom Bildgeber in Richtung auf die Eye-Box 109 betrachtet worden ist.

Dadurch, dass die sammelnde Wirkung im Brillenglas nicht wie beim schräggestellten Konkavspiegel aus Figur 3 durch die Auskopplungsstruktur bewirkt wird, kann bei Verwendung einer Fresnelstruktur 9 als Auskopplungsstruktur diese vorwiegend zum Strahlablenken verwendet werden. Hierdurch können die vorteilhaften Eigenschaften der Fresnelstruktur 9 bezüglich des Footprintoverlaps mit den Vorteilen der sammelnden Wirkung eines Konkavspiegels kombiniert werden. Da die konkav gekrümmte Reflektionsfläche R3 nicht gegenüber der Außenfläche 5 verkippt zu werden braucht, entsteht keine Einschränkung der Étendue, sodass gleichzeitig eine große Étendue, ein großer Sichtfeldwinkel δ und eine große Eye-Box realisiert werden können. Außerdem kann die Einkopplung über einen relativ schmalen Einkopplungsabschnitt erfolgen, so dass auf ggf. das Vorsehen einer speziellen Einkopplungsstruktur verzichtet werden kann.

Zum Vergleich: Wenn als Étendue E vereinfacht das Produkt aus dem Sichtfeldwinkel δ des horizontalen Sichtfeldes und der horizontalen Breite der Eyebox angesehen wird, ergibt sich bei einer Glasdicke von 4 mm im Falle des in Figur 2 dargestellten Brillenglases nach Stand der Technik eine Étendue E von 4mm x 7,5grd = 30 mm*grd. Bei der in Figur 5 dargestellten Variante des Brillenglases lässt sich dagegen eine Étendue von E = 8mm x 12grd = 96 mm*grd erreichen.

Ein Ausführungsbeispiel für ein erfindungsgemäßes Brillenglas ist in Figur 6 dargestellt. Das Brillenglas 31 des Ausführungsbeispiels unterscheidet sich von dem aus Figur 5 dadurch, dass es einen brillenglasförmigen Grundkörper 32 aufweist, in dessen Außenfläche 35 (im Folgenden Grundkörperaußenfläche genannt) die Fresnelstruktur 39 und die konkaven Reflexionsfläche R3 eingeprägt sind. Auf der Grundkörperaußenfläche 35 ist eine zweischichtige Beschichtung 41 aufgebracht, wobei die erste, direkt an die Reflektionsfläche R3 und die Fresnelstruktur 39 angrenzende Schicht 43 einen niedrigeren Brechungsindex als des Material des Grundkörpers 32 aufweist und die zweite, äußere Schicht 45 einen an den Brechungsindex des Materials Grundkörpers 32 angepassten Brechungsindex aufweist. Die Anpassung des Brechungsindex der äußeren Schicht 45 ist dabei so gewählt, dass er sich im vorliegenden Ausführungsbeispiel nicht mehr als 1 ‰ vom Brechungsindex des Grundkörpermaterials unterscheidet. Je nach Anwendungsfall kann aber auch ein etwas größerer Brechungsindexunterschied zugelassen werden. Auf jeden Fall sollte sich der Brechungsindex der äußeren Schicht 45 jedoch nicht um mehr als 5 ‰ vom Brechungsindex des Grundkörpermaterials unterscheiden. Nach außen hin weist die äußere Schicht 45 einen für die Außenfläche des beschichteten Brillenglases 31 geeigneten Krümmungsradius auf, der im Wesentlichen der Grundkrümmung des Grundkörpers 32 entspricht. Durch die Beschichtung 41 kann verhindert werden, dass die konkave Reflexionsfläche R3 das durch sie hindurchtretende Umgebungslicht negativ beeinflusst. Die innere Schicht 43 mit dem niedrigen Brechungsindex sorgt dabei dafür, dass an der Grenzfläche zwischen dem Grundkörper 32 und der Beschichtung 41 im Bereich der Reflexionsfläche R3 und im Bereich der Fresnelfacetten Totalreflexion stattfindet.

Damit an der die Grenzfläche des Grundkörpers 32 zur inneren Schicht 43 der Beschichtung 41 eine Totalreflexion erfolgen kann, müssen die Einfallswinkel $\theta_E$ der Strahlen des Abbildungsstrahlengangs bezogen auf das Flächenlot eines Flächenelementes, an dem die Totalreflexion stattfinden soll, größer als der Grenzwinkel $\theta_G$ für das Auftreten von Totalreflexion sein. Der Grenzwinkel ist dabei durch das Verhältnis des ersten Brechungsindex $n_1$, also des Brechungsindex des Materials des Grundkörpers 32, zum zweiten Brechungsindex $n_2$, also dem Brechungsindex inneren Schicht 43 der Beschichtung 41, bestimmt und lässt sich aus der Gleichung

$$\theta_G = \arcsin(n_2/n_1) \qquad\qquad (1)$$

berechnen. Bei einem gegebenen Einfallswinkel $\theta_E$ der Strahlen des Abbildungsstrahlengangs auf das reflektierende Flächenelement, der aus dem Design des Grundkörpers 32 und der Einkopplung des Abbildungsstrahlengangs in den Grundkörper 32 durch den Einkopplungsabschnitt 37 resultiert, und einem gegebenen Brechungsindex n1 des Materials des Grundkörpers 32 kann der für das Auftreten von Totalreflektion an der Grenzfläche des Grundkörpers 32 zur inneren Schicht 43 der Beschichtung 41 benötigte Brechungsindex n2 ermittelt werden. Totalreflektion tritt dabei auf, wenn am reflektierenden Flächenelement die Ungleichung

$$n2 < n1 \sin(\theta_E) \qquad\qquad (2)$$

erfüllt ist. Da $\sin(\theta_E)$ immer kleiner oder gleich 1 ist, muss der zweite Brechungsindex $n_2$ also kleiner als der erste Brechungsindex n1 sein. Wie viel kleiner als $n_1$ hängt dabei von dem Einfallswinkel $\theta_E$ auf das Flächenelement - und damit vom Design des Grundkörpers 32 und der Einkopplung des Abbildungsstrahlengangs in den Grundkörper 32 - ab.

Obwohl die Beschichtung 41 lediglich im Bereich der Fresnelstruktur 39 und der konkaven Reflexionsfläche R3 vorhanden zu sein braucht, ist es fertigungstechnisch vorteilhaft, wenn die Beschichtung 41 wie in dem in Figur 6 gezeigten Ausführungsbeispiel auf die gesamte Grundkörperaußenfläche 35 aufgebracht ist.

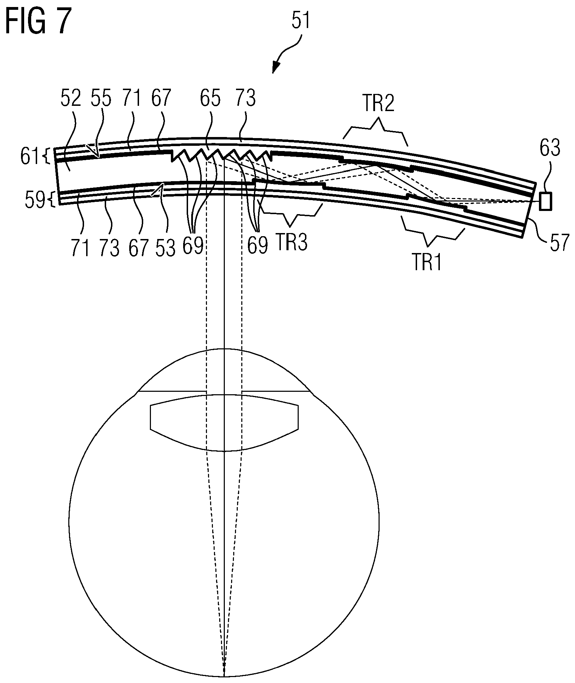

Im Rahmen der vorliegenden Erfindung können auch mehrere der Reflexionsflächen als konkave Reflexionsflächen ausgestaltet sein und damit eine sammelnde Wirkung aufweisen. Die konkaven Reflexionsflächen können dabei sowohl an der Innenfläche des Grundkörpers als auch an der Außenfläche des Grundkörpers angeordnet sein. Ein entsprechendes Ausführungsbeispiel ist in Figur 7 dargestellt. Die Figur zeigt ein Brillenglas 51, das einen Grundkörper 52 mit einer dem Auge eines Nutzers zuzuwendenden Grundkörperinnenfläche 53 und einer vom Auge des Nutzers abzuwendenden Grundkörperaußenfläche 55 umfasst. Zudem umfasst das Brillenglas 51 auf die Grundkörperinnenfläche 53 und die Grundkörperaußenfläche 55 aufgebrachte Beschichtungen 59, 61.

Der Grundkörper 52 ist an seinem Rand mit einem Einkopplungsabschnitt 57 versehen. Über den Einkopplungsabschnitt 57 wird ein von einem Bildgeber 63 ausgehendes Strahlenbündel eines Abbildungsstrahlengangs zwischen die Grundkörperinnenfläche 53 und die Grundkörperaußenfläche 55 in den Grundkörper 52 eingekoppelt. Im Grundkörper 52 wird der Abbildungsstrahlengang im vorliegenden Ausführungsbeispiel über drei Reflexionsflächen TR1, TR2 und TR3, an denen eine Totalreflexion des Abbildungsstrahlenbündels erfolgt, zu einer Auskopplungsstruktur in Form eines Fresnelelementes 65 geleitet, von dem der Abbildungsstrahlengang in Richtung auf das Auge des Nutzers aus dem Brillenglas 51 ausgekoppelt wird.

Die Reflexionsfläche TR1 sowie die Reflexionsfläche TR3 sind in der Innenfläche 53 des Grundkörpers 52 ausgebildet, wohingegen die Reflexionsfläche TR2 sowie die Fresnelstruktur 65 in der Außenfläche 55 des Grundkörpers 52 ausgebildet sind. Wenn der Grundkörper 52 beispielsweise aus einem Kunststoff spritzgegossen wird, können die Reflexionsflächen TR1, TR2 und TR3 und die Fresnelstruktur 65 beispielsweise mittels einer geeigneten Spritzgussform in die jeweilige Grundkörperfläche eingeprägt werden.

In dem in Figur 7 dargestellten Ausführungsbeispiel weisen alle drei Reflexionsflächen TR1, TR2 und TR3 eine konkave Krümmung auf, sodass sie eine sammelnde Wirkung besitzen.

Die auf die Grundkörperinnenfläche 53 und die Grundkörperaußenfläche 55 aufgebrachten Beschichtungen 59, 61 sind jeweils aus mehreren Schichten aufgebaut. Direkt an die Grundkörperinnenfläche 53 bzw. an die Grundkörperaußenfläche 55 angrenzend ist eine Klebstoffschicht 67 mit niedrigem Brechungsindex aufgebracht. Der Brechungsindex der Klebstoffschicht 67 ist dabei so gewählt, dass an der Grenzfläche zwischen der Grundkörperinnenfläche 53 und der Klebstoffschicht 67 bzw. der der Grundkörperaußenfläche 55 und der Klebstoffschicht 67 eine Totalreflexion des Abbildungsstrahlengangs erfolgt. Die Kriterien, die der Brechungsindex der Klebstoffschicht 67 erfüllen muss ergeben sich dabei aus der oben beschriebenen Ungleichung 2.

Die Facetten 69 der Fresnelstruktur 65 sind im vorliegenden Ausführungsbeispiel teilverspiegelt, sodass die Auskopplung nicht mittels Totalreflexion erfolgt. Daher ist im vorliegenden Ausführungsbeispiel die Klebstoffschicht 67 mit dem niedrigen Brechungsindex nicht über der Fresnelstruktur 65 aufgebracht.

Über der Klebstoffschicht 67 mit dem niedrigen Brechungsindex befindet sich sowohl an der Grundkörperinnenfläche 53 als auch an der Grundkörperaußenfläche 55 eine weitere Klebstoffschicht 71, die einen Brechungsindex aufweist, welcher an den Brechungsindex des Grundkörpers 52 derart angepasst ist, dass sich die beiden Brechungsindices um nicht mehr als 5 ‰ voneinander unterscheiden und vorzugsweise um nicht mehr als 1 ‰ voneinander unterscheiden. Diese brechungsindexangepasste Klebstoffschicht 71 befindet sich über der gesamten niedrigbrechenden Klebstoffschicht. Zudem ist die brechungsindexangepasste Klebstoffschicht 71 auch auf die Fresnelstruktur 65 aufgebracht.

Über der brechzahlangepassten Klebstoffschicht 71 befindet sich im vorliegenden Ausführungsbeispiel eine Schutzfolie 73, deren Brechungsindex ebenfalls an den Brechungsindex des Grundkörpers 52 angepasst ist. Auch für den Brechungsindex der Schutzfolie 73 gilt, dass dieser in Bezug auf den Brechungsindex des Grundkörpers 52 so gewählt ist, dass die beiden Brechungsindices um nicht mehr als 5 ‰, vorzugsweise um nicht mehr als 1 ‰ voneinander abweichen. Die Krümmungsradien der die Brillenglasaußenfläche bzw. der Brillenglasinnenfläche bildenden Flächen der Schutzfolien 73 entsprechen jeweils der Grundkrümmung des Brillenglases 51, welche der Grundkrümmung des Grundkörpers 52 entspricht.

Durch das Aufbringen einer mehrerer brechzahlangepasster Schichten bzw. Folien auf die Klebstoffschicht 67 mit niedrigem Brechungsindex bzw. die Fresnelstruktur 65 kann eine für den Nutzer wahrnehmbare Beeinflussung des Umgebungslichtes beim hindurchtreten durch die Fresnelstruktur 65 bzw. die Reflexionsflächen TR1, TR2 und TR3 vermieden werden.

Zusätzlich zu der Schutzfunktion kann die im vorliegenden Ausführungsbeispiel verwendete Folie 73 weitere Funktionen aufweisen. So kann sie beispielsweise mit einer Absorptions- oder Polarisationsfunktion ausgestattet sein, sodass das Brillenglas als Glas einer Sonnenbrille Verwendung finden kann.

Im gerade beschriebenen Ausführungsbeispiel wurde ein Grundkörper verwendet, der mittels eines Spritzgussverfahrens aus einem organischen Glas hergestellt worden ist. Grundsätzlich kann der Grundkörper aber auch aus einem mineralischen Glas hergestellt sein. In Abweichung von dem in Figur 7 dargestellten Ausführungsbeispiel besteht die Möglichkeit, lediglich die Reflexionsfläche TR2 in der Grundkörperaußenfläche 55 mit einer konkaven Wirkung zu versehen. Die Krümmungen der Reflexionsflächen TR1 und TR3 weichen dann nicht von der Grundkrümmung des Grundkörpers 52 ab. Da in diesem Fall im Bereich der Grundkörperinnenfläche 53 keine sammelnde Wirkung der Reflexionsflächen TR1 und TR3 vorliegt, wirken sich die Reflexionsflächen TR1 und TR3 auch nicht negativ auf durch das Brillenglas 51 hindurchtretendes Umgebungslicht aus, sodass auf das Beschichtungssystem auf der Grundkörperinnenfläche verzichtet werden kann, wenn die Reflexionsflächen TR1 und TR3 nicht konkav ausgebildet sind. Selbstverständlich besteht auch die Möglichkeit, nur die Reflexionsflächen TR1 und TR3 an der Grundkörperinnenfläche mit einer sammelnden Wirkung zu versehen. In diesem Fall wäre das Beschichtungssystem 59 auf der Grundkörperinnenfläche 53 vorhanden. Da die Reflexionsfläche TR2 in der Grundkörperaußenfläche 55 dann keine sammelnde Wirkung aufweist, wird das Beschichtungssystem 61 auf der Grundkörperaußenfläche 55 nicht benötigt. Lediglich die Fresnelstruktur 65 wird dann mit einem brechzahlangepassten Material aufgefüllt, um eine negative Beeinflussung von durch die Fresnelstruktur 65 hindurchtretendem Umgebungslicht zu vermeiden.

In dem mit Bezug auf Figur 7 beschriebenen Ausführungsbeispiel besteht auch die Möglichkeit, eine oder mehrere der Reflexionsflächen TR1, TR2 und TR3 zusätzlich mit einer Freiformfläche zu überlagern, sodass neben der sammelnden Wirkung auch eine Abbildungsfehler reduzierende Wirkung der entsprechenden Reflexionsfläche herbeigeführt werden kann.

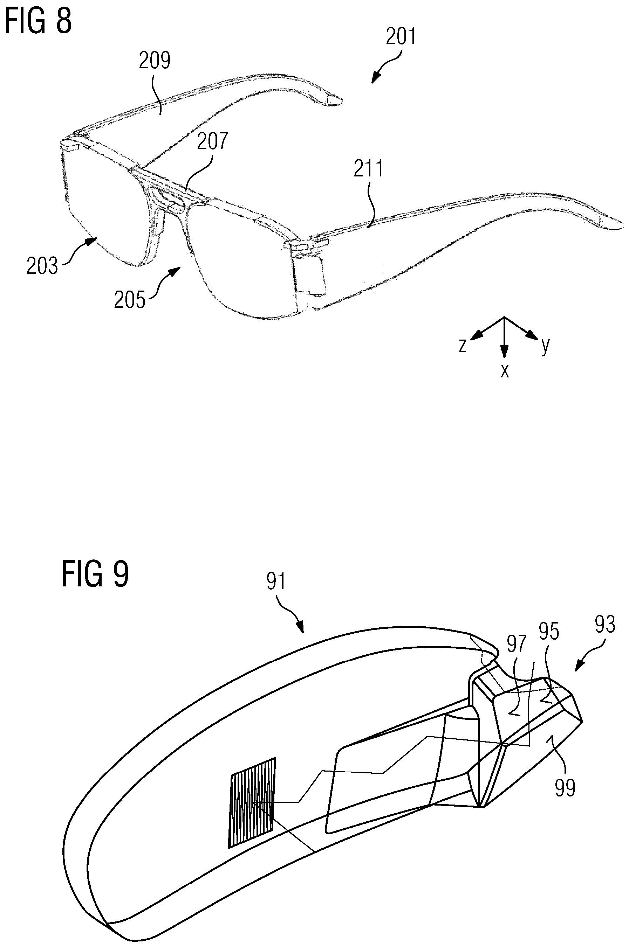

Nachfolgend wird eine Datenbrille mit einem erfindungsgemäßen Brillenglas beschrieben. Das Brillenglas ist Teil einer Abbildungsoptik zum Erzeugen eines virtuellen Bildes von einem auf einem Bildgeber dargestellten Ausgangsbild. Eine entsprechende Datenbrille 201 ist in Figur 8 gezeigt.

Die Datenbrille 201 umfasst zwei erfindungsgemäße Brillengläser 203, 205, die von einem Brillengestell 207 mit zwei Brillenbügeln 209, 211 gehalten werden. Die Brillengläser 203, 205 können wie in den Ausführungsbeispielen beschrieben ausgebildet sein. Im Brillenbügel 209, 211 oder zwischen dem Brillenbügel 209, 211 und dem jeweiligen Brillenglas 203, 205, bspw. angrenzend an den Einkopplungsabschnitt des jeweiligen Brillenglases, befindet ein Bildgeber, der als Flüssigkristallanzeige (LCD- oder LCoS-Display, LCoS: Liquid Crystal on Silicon), als auf Leuchtdioden basierendes Display (LED-Display), als auf organischen Leuchtdioden basierendes Display (OLED-Display), etc. ausgebildet sein kann. Zwischen dem Bildgeber und dem Brillenglas kann als Teil der Abbildungsoptik eine Einkopplungseinrichtung angeordnet sein, die das Einkoppeln eines vom Bildgeber ausgehender Abbildungsstrahlengangs über den Einkopplungsabschnitt in das Brillenglas unterstützt. Die Einkopplungseinrichtung kann bspw. als Prisma mit einer Eintrittsfläche, einer ersten Spiegelfläche und einer zweiten Spiegelfläche ausgebildet sein und aus Glas oder transparentem Kunststoff bestehen, wobei die Eintrittsfläche und die Spiegelflächen durch Flächen des Prismas gebildet sind. Ein solches Brillenglas 91 mit einem Prisma 93 als Einkopplungseinrichtung ist in Figur 9 dargestellt. Von dem Prisma 93 sind in Figur 9 die Eintrittsfläche 75 sowie die Reflektionsflächen 97, 99 zu erkennen.

Die vorliegende Erfindung wurde anhand von Ausführungsbeispielen zu Erläuterungszwecken im Detail beschrieben. Ein Fachmann erkennt jedoch, dass die Erfindung nicht auf die Ausgestaltung der Ausführungsbeispiele beschränkt ist. Insbesondere kann in allen Ausführungsbeispielen eine beliebige Anzahl der Reflexionsflächen mit einer sammelnden Wirkung versehen sein. Ebenso besteht in allen Ausführungsbeispielen die Möglichkeit, eine beliebige Anzahl der Reflexionsflächen mit Freiformflächen zum Korrigieren von Abbildungsfehlern zu überlagern. Auch können die in den Ausführungsbeispielen erwähnten Beschichtungen mehr als die beschriebenen Schichten oder weniger als die beschriebenen Schichten aufweisen. Beispielsweise kann in den mit Bezug auf Figur 7 beschriebenen Ausführungsbeispiel die brechzahlangepasste Klebstoffschicht weggelassen werden, wenn die Auskopplung über die Fresnelstruktur mittels Totalreflektion erfolgt, die Klebstoffschicht mit niedrigem Brechungsindex auch über der Fresnelstruktur aufgebracht wird und die Klebstoffschicht als Klebstoff zum Fixieren der Schutzfolie geeignet ist. Ebenso kann die Zahl der verwendeten Totalreflexionen zwischen dem Einkopplungsabschnitt und der Auskopplungsstruktur mehr als 4 oder weniger als 3 betragen. Schließlich sei noch darauf hingewiesen, dass die Auskopplungsstruktur in den Ausführungsbeispielen zwar eine Fresnelstruktur ist, die vorliegende Erfindung grundsätzlich jedoch auch bei Brillengläsern mit diffraktiver Auskopplungsstruktur zur Anwendung kommen kann. Auch ist nicht ausgeschlossen, dass die vorliegende Erfindung in Verbindung mit einem schräg gestellten Spiegel als Auskopplungsstruktur Verwendung findet. Die vorliegende Erfindung soll daher lediglich durch die beigefügten Ansprüche beschränkt sein.

**Patentansprüche**

1. Brillenglas (31, 51) für eine Abbildungsoptik zum Erzeugen eines virtuellen Bildes von einem auf einem Bildgeber (63) dargestellten Ausgangsbild, umfassend:

   - eine dem Auge zuzuwendende Innenfläche (33, 53), eine vom Auge abzuwendende Außenfläche (35, 55),
   - einen am Rand des Brillenglases befindlichen Einkopplungsabschnitt (37, 57) zum Einkoppeln eines vom Ausgangsbild ausgehenden Abbildungsstrahlenbündels eines Abbildungsstrahlengangs zwischen die Innenfläche (33, 53) und die Außenfläche (35, 55) des Brillenglases (31, 51) und

- eine in dem Brillenglas (31, 51) vorhandene Auskopplungsstruktur (39, 65) zum Auskoppeln des über den Einkopplungsabschnitt (37, 57) eingekoppelten Abbildungsstrahlenbündels aus dem Brillenglas (31, 51) in Richtung auf das Auge,

- Reflektionsflächen im Bereich der Innenfläche (33, 53) und im Bereich der Außenfläche (35, 55), die sich zwischen dem Einkopplungsabschnitt (37, 57) und der Auskopplungsstruktur (39, 65) befinden

wobei das über den Einkopplungsabschnitt (37, 57) eingekoppelte Abbildungsstrahlenbündel durch auf Totalreflektion beruhenden Reflektionen an den Reflektionsflächen zwischen der Innenfläche (33, 53) und der Außenfläche (35, 55) zur Auskopplungsstruktur (39, 65) geleitet wird,

wobei

- das Brillenglas (31, 51) einen transparenten Grundkörper (32, 52) mit einem ersten Brechungsindex aufweist, in den der Abbildungsstrahlengang einkoppelt wird, wobei der Grundkörper (32, 52) eine der Innenfläche des Brillenglases (31, 51) entsprechende Grundkörperinnenfläche (33, 53) sowie eine der Außenfläche des Brillenglases (31, 51) entsprechende Grundkörperaußenfläche (35, 55) aufweist, und wenigstens eine der Reflektionsflächen

(i) ein im Bereich der Grundkörperinnenfläche (33, 53) ausgebildeter und vom Inneren des Brillenglases (31, 51) aus gesehen konkav gekrümmter Flächenabschnitt (TR1, TR3) ist, dessen Krümmung sich von einer vom Inneren des Brillenglases (31, 51) aus gesehen konvexen Grundkrümmung der Innenfläche (33, 53) des Brillenglases (31, 51) unterscheidet
und/oder

(ii) ein im Bereich der Grundkörperaußenfläche (35, 55) ausgebildeter und vom Inneren des Brillenglases (31, 51) aus gesehen konkav gekrümmter Flächenabschnitt (R3, TR2) ist, dessen Krümmung sich von einer vom Inneren des Brillenglases (31, 51) aus gesehen konkaven Grundkrümmung der Außenfläche (35, 55) des Brillenglases (31, 51) derart unterscheidet, dass sie eine gegenüber der konkaven Grundkrümmung der Außenfläche (35, 55) erhöhte Konkavität aufweist,

- sich im Bereich des wenigstens einen konkav gekrümmten Flächenabschnitts auf der Grundkörperinnenfläche (33, 53) und/oder der Grundkörperaußenfläche (35, 55) eine erste Schicht (43, 67) mit einem zweiten Brechungsindex befindet, der im Verhältnis zum ersten Brechungsindex so gewählt ist, dass an der Grenzfläche zwischen dem Grundkörper (32, 52) und der ersten Schicht (43, 67) eine Totalreflektion von Lichtstrahlen des Abbildungsstrahlengangs erfolgt, und

- sich über der ersten Schicht (43, 67) wenigstens eine zweite Schicht (45, 71, 73) mit einem dem Brechungsindex des Materials des Grundkörpers (32, 52) entsprechenden Brechungsindex befindet.

2. Brillenglas (31, 51) nach Anspruch 1, **dadurch gekennzeichnet, dass** die Auskopplungsstruktur (39, 64) ausschließlich strahlablenkend ausgebildet ist.

3. Brillenglas (31, 51) nach Anspruch 1 oder Anspruch 2, **dadurch gekennzeichnet, dass** zumindest diejenige Reflektionsfläche (TR3), an der die letzte Reflektion des Abbildungsstrahlengangs vor der Auskopplungsstruktur (39) erfolgt, als vom Inneren des Brillenglases (31, 51) aus gesehen konkav gekrümmte Reflektionsfläche ausgebildet ist.

4. Brillenglas (1, 31, 51) nach einem der vorangehenden Ansprüche, **dadurch gekennzeichnet, dass** zumindest diejenige Reflektionsfläche (R3, TR2), an der die vorletzte Reflektion des Abbildungsstrahlengangs vor der Auskopplungsstruktur (9, 39, 65) erfolgt, als konkav gekrümmte Reflektionsfläche ausgebildet ist.

5. Brillenglas (51) nach einem der Ansprüche 1 bis 4, **dadurch gekennzeichnet, dass** die zweite Schicht eine Folie (73) mit einem dem Brechungsindex des Materials des Grundkörpers (32, 52) entsprechenden Brechungsindex ist oder eine solche umfasst.

6. Brillenglas (51) nach einem der Ansprüche 1 bis 5, **dadurch gekennzeichnet, dass** die erste Schicht eine Klebstoffschicht (67) ist oder umfasst und/oder die zweite Schicht eine Klebstoffschicht (71) ist oder umfasst.

7. Brillenglas (51) nach Anspruch 5 und Anspruch 6, **dadurch gekennzeichnet, dass** die zweite Schicht eine an die erste Schicht (67) angrenzende Klebstoffschicht (71) und eine an die Klebstoffschicht (71) angrenzende Folie (73) mit einem dem Brechungsindex des Materials des Grundkörpers (32, 52) entsprechenden Brechungsindex umfasst.

8. Brillenglas (31, 51) nach einem der vorangehenden Ansprüche, **dadurch gekennzeichnet, dass** der wenigstens einen konkav gekrümmten Reflektionsfläche (R1, R2, R3, R4, TR1, TR2, TR3) eine Freiformfläche mit Abbildungsfehler korrigierenden Eigenschaften überlagert ist.

9. Abbildungsvorrichtung zum Erzeugen eines virtuellen Bildes mit einem Bildgeber (63) zum Darstellen eines Ausgangsbildes und einem Brillenglas (51) nach einem der vorangehenden Ansprüche.

10. Abbildungsvorrichtung nach Anspruch 9, **dadurch gekennzeichnet, dass** der Bildgeber (63) unmittelbar am Einkopplungsabschnitt (57) oder unmittelbar in der Nähe des Einkopplungsabschnitts (57) angeordnet ist.

11. Abbildungsvorrichtung nach Anspruch 9, **dadurch gekennzeichnet, dass** zwischen dem Bildgeber (63) und dem Einkopplungsabschnitt (57) eine Einkopplungseinrichtung (93) zum Einkoppeln eines vom Ausgangsbild ausgehenden Abbildungsstrahlengangs zwischen die Innenfläche und die Außenfläche des Brillenglases (1, 31, 51) vorhanden ist.

12. Datenbrille mit wenigstens einer Abbildungsvorrichtung nach einem der Ansprüche 9 bis 11.

**Claims**

1. Spectacle lens (31, 51) for an imaging optical unit for generating a virtual image of an initial image represented on an image generator (63), comprising:

   - an inner surface (33, 53) that is to face the eye and an outer surface (35, 55) that is to face away from the eye,
   - an input coupling section (37, 57) situated at the edge of the spectacle lens and serving for coupling an imaging beam of rays of an imaging beam path emanating from the initial image in between the inner surface (33, 53) and the outer surface (35, 55) of the spectacle lens (31, 51), and
   - an output coupling structure (39, 65) present in the spectacle lens (31, 51) and serving for coupling the imaging beam of rays coupled in via the input coupling section (37, 57) out from the spectacle lens (31, 51) in the direction of the eye,
   - reflection surfaces in the region of the inner surface (33, 53) and in the region of the outer surface (35, 55), which are situated between the input coupling section (37, 57) and the output coupling structure (39, 65),
   wherein the imaging beam of rays coupled in via the input coupling section (37, 57) is guided by reflections based on total internal reflection at the reflection surfaces between the inner surface (33, 53) and the outer surface (35, 55) to the output coupling structure (39, 65),
   wherein

      - the spectacle lens (31, 51) has a transparent main body (32, 52) having a first refractive index, into which the imaging beam path is coupled, wherein the main body (32, 52) has a main body inner surface (33, 53) corresponding to the inner surface of the spectacle lens (31, 51), and also a main body outer surface (35, 55) corresponding to the outer surface of the spectacle lens (31, 51), and
      at least one of the reflection surfaces

         (i) is a surface section (TR1, TR3) which is formed in the region of the main body inner surface (33, 53) and which is curved concavely as viewed from the interior of the spectacle lens (31, 51) and the curvature of which differs from a basic curvature of the inner surface (33, 53) of the spectacle lens (31, 51), which basic curvature is convex as viewed from the interior of the spectacle lens (31, 51), and/or
         (ii) is a surface section (R3, TR2) which is formed in the region of the main body outer surface (35, 55) and which is curved concavely as viewed from the interior of the spectacle lens (31, 51) and the curvature of which differs from a basic curvature of the outer surface (35, 55) of the spectacle lens (31, 51), which basic curvature is concave as viewed from the interior of the spectacle lens (31, 51), in such a way that it has an increased concavity relative to the concave basic curvature of the outer surface (35, 55),

      - there is situated in the region of the at least one concavely curved surface section on the main body inner surface (33, 53) and/or the main body outer surface (35, 55) a first layer (43, 67) having a second refractive index, which is chosen in relation to the first refractive index such that a total internal reflection of light rays of the imaging beam path takes place at the interface between the main body (32, 52) and the first layer (43, 67), and
- at least one second layer (45, 71, 73) having a refractive index corresponding to the refractive index of the material of the main body (32, 52) is situated above the first layer (43, 67).

2. Spectacle lens (31, 51) according to Claim 1, **characterized in that** the output coupling structure (39, 64) is configured exclusively in beam-deflecting fashion.

3. Spectacle lens (31, 51) according to Claim 1 or Claim 2, **characterized in that** at least that reflection surface (TR3) at which the last reflection of the imaging beam path takes place upstream of the output coupling structure (39) is configured as a reflection surface which is curved concavely as viewed from the interior of the spectacle lens (31, 51).

4. Spectacle lens (1, 31, 51) according to any of the preceding claims, **characterized in that** at least that reflection surface (R3, TR2) at which the penultimate reflection of the imaging beam path takes place upstream of the output coupling structure (9, 39, 65) is configured as a concavely curved reflection surface.

5. Spectacle lens (51) according to any of Claims 1 to 4, **characterized in that** the second layer is or comprises a film (73) having a refractive index corresponding to the refractive index of the material of the main body (32, 52).

6. Spectacle lens (51) according to any of Claims 1 to 5, **characterized in that** the first layer is or comprises an adhesive layer (67) and/or the second layer is or comprises an adhesive layer (71).

7. Spectacle lens (51) according to Claim 5 and Claim 6, **characterized in that** the second layer comprises an adhesive layer (71) adjoining the first layer (67) and a film (73) adjoining the adhesive layer (71) and having a refractive index corresponding to the refractive index of the material of the main body (32, 52).

8. Spectacle lens (31, 51) according to any of the preceding claims, **characterized in that** a freeform surface having properties that correct imaging aberrations is superimposed on the at least one concavely curved reflection surface (R1, R2, R3, R4, TR1, TR2, TR3).

9. Imaging device for generating a virtual image comprising an image generator (63) for representing an initial image and a spectacle lens (51) according to any of the preceding claims.

10. Imaging device according to Claim 9, **characterized in that** the image generator (63) is arranged directly at the input coupling section (57) or directly in the vicinity of the input coupling section (57).

11. Imaging device according to Claim 9, **characterized in that** an input coupling unit (93) for coupling an imaging beam path emanating from the initial image in between the inner surface and the outer surface of the spectacle lens (1, 31, 51) is present between the image generator (63) and the input coupling section (57).

12. Data goggles comprising at least one imaging device according to any of Claims 9 to 11.

**Revendications**

1. Verre de lunettes (31, 51) pour un système optique d'imagerie destiné à générer une image virtuelle à partir d'une image de départ représentée sur un imageur (63), comprenant :

- une surface intérieure (33, 53) destinée à être tournée vers l'œil, une surface extérieure (35, 55) destinée à être opposée à l'œil,
- une section de couplage (37, 57) située au bord du verre de lunettes pour le couplage d'un faisceau de rayons d'imagerie, provenant de l'image de départ, d'un chemin de rayonnement d'imagerie entre la surface intérieure (33, 53) et la surface extérieure (35, 55) du verre de lunettes (31, 51), et
- une structure de découplage (39, 65) présente dans le verre de lunettes (31, 51) pour le découplage du faisceau de rayons d'imagerie, couplé par l'intermédiaire de la section de couplage (37, 57), hors du verre de lunettes (31, 51) en direction de l'œil,
- des surfaces de réflexion dans la zone de la surface intérieure (33, 53) et dans la zone de la surface extérieure (35, 55), qui se situent entre la section de couplage (37, 57) et la structure de découplage (39, 65), le faisceau de rayons d'imagerie couplé par l'intermédiaire de la section de couplage (37, 57) étant guidé vers la structure de découplage (39, 65) par des réflexions reposant sur la réflexion totale sur les surfaces de réflexion entre la surface intérieure (33, 53) et la surface extérieure (35, 55),

dans lequel

- le verre de lunettes (31, 51) présente un corps de base (32, 52) transparent ayant un premier indice de réfraction, dans lequel le chemin de rayonnement d'imagerie est couplé, le corps de base (32, 52) présentant une surface intérieure de corps de base (33, 53) correspondant à la surface intérieure du verre de lunettes (31, 51) ainsi qu'une surface extérieure de corps de base (35, 55) correspondant à la surface extérieure du verre de lunettes (31, 51), et

au moins l'une des surfaces de réflexion

(i) est une section de surface (TR1, TR3) formée dans la zone de la surface intérieure de corps de base (33, 53) et courbée de façon concave vue de l'intérieur du verre de lunettes (31, 51), dont la courbure diffère d'une courbure de base convexe, vue de l'intérieur du verre de lunettes (31, 51), de la surface intérieure (33, 53) du verre de lunettes (31, 51),

et/ou

(ii) est une section de surface (R3, TR2) formée dans la zone de la surface extérieure de corps de base (35, 55) et courbée de façon concave vue de l'intérieur du verre de lunettes (31, 51), dont la courbure diffère d'une courbure de base concave, vue de l'intérieur du verre de lunettes (31, 51), de la surface extérieure (35, 55) du verre de lunettes (31, 51) de telle sorte qu'elle présente une concavité accrue par rapport à la courbure de base concave de la surface extérieure (35, 55),

- dans la zone de ladite au moins une section de surface courbée de façon concave sur la surface intérieure de corps de base (33, 53) et/ou la surface extérieure de corps de base (35, 55) se trouve une première couche (43, 67) ayant un deuxième indice de réfraction qui est choisi, par rapport au premier indice de réfraction, de telle sorte qu'à l'interface entre le corps de base (32, 52) et la première couche (43, 67), il se produit une réflexion totale de rayons lumineux du chemin de rayonnement d'imagerie, et

- au-dessus de la première couche (43, 67) se trouve au moins une deuxième couche (45, 71, 73) ayant un indice de réfraction correspondant à l'indice de réfraction du matériau du corps de base (32, 52).

2.  Verre de lunettes (31, 51) selon la revendication 1, **caractérisé en ce que** la structure de découplage (39, 64) est conçue pour être exclusivement déviatrice de rayons.

3.  Verre de lunettes (31, 51) selon la revendication 1 ou la revendication 2, **caractérisé en ce qu'**au moins la surface de réflexion (TR3) sur laquelle se produit la dernière réflexion du chemin de rayonnement d'imagerie avant la structure de découplage (39) est conçue sous la forme d'une surface de réflexion courbée de façon concave, vue de l'intérieur du verre de lunettes (31, 51).

4.  Verre de lunettes (1, 31, 51) selon l'une quelconque des revendications précédentes, **caractérisé en ce qu'**au moins la surface de réflexion (R3, TR2) sur laquelle se produit l'avant-dernière réflexion du faisceau d'imagerie avant la structure de découplage (9, 39, 65) est conçue sous la forme d'une surface de réflexion concave.

5.  Verre de lunettes (51) selon l'une quelconque des revendications 1 à 4, **caractérisé en ce que** la deuxième couche est ou comprend un film (73) ayant un indice de réfraction correspondant à l'indice de réfraction du matériau du corps de base (32, 52).

6.  Verre de lunettes (51) selon l'une quelconque des revendications 1 à 5, **caractérisé en ce que** la première couche est ou comprend une couche d'adhésif (67) et/ou **en ce que** la deuxième couche est ou comprend une couche d'adhésif (71).

7.  Verre de lunettes (51) selon la revendication 5 et la revendication 6, **caractérisé en ce que** la deuxième couche comprend une couche d'adhésif (71) adjacente à la première couche (67) et un film (73) adjacent à la couche d'adhésif (71) ayant un indice de réfraction correspondant à l'indice de réfraction du matériau du corps de base (32, 52).

8.  Verre de lunettes (31, 51) selon l'une quelconque des revendications précédentes, **caractérisé en ce qu'**à ladite au moins une surface de réflexion courbée de façon concave (R1, R2, R3, R4, TR1, TR2, TR3) est superposée une surface de forme libre ayant des propriétés de correction d'aberrations.

9.  Dispositif d'imagerie pour la génération d'une image virtuelle, comprenant un imageur (63) pour la représentation d'une image de départ et un verre de lunettes (51) selon l'une quelconque des revendications précédentes.

10. Dispositif d'imagerie selon la revendication 9, **caractérisé en ce que** l'imageur (63) est disposé directement sur la section de couplage (57) ou à proximité immédiate de la section de couplage (57).

11. Dispositif d'imagerie selon la revendication 9, **caractérisé en ce qu'**entre l'imageur (63) et la section de couplage (57) se trouve un dispositif de couplage (93) pour le couplage d'un chemin de rayonnement d'imagerie, provenant de l'image de départ, entre la surface intérieure et la surface extérieure du verre de lunettes (1, 31, 51).

12. Lunettes de données comprenant au moins un dispositif d'imagerie selon l'une quelconque des revendications 9 à 11.

FIG 1

FIG 2

FIG 3

FIG 4

FIG 5

FIG 6

FIG 7

51

52 55 71 67    65    73          TR2

61{

59{

71 73 67 53 69    69  TR3

TR1

63

57

FIG 8

FIG 9

**IN DER BESCHREIBUNG AUFGEFÜHRTE DOKUMENTE**

**In der Beschreibung aufgeführte Patentdokumente**

- DE 102013214700 A1
- EP 0790516 A1
- US 20150253487 A1
- US 20160131907 A1
- DE 102014207499 A1
- DE 102014118490 A1